# EUROPEAN PATENT APPLICATION

(11) **EP 1 895 526 A1**
(43) Date of publication of application: **05.03.2008**
(21) Application number: 07016349.8
(22) Date of filing: 21.08.2007
(51) Int. Cl.: G11B 7/135

(54) **Optical pickup device**

(30) Priority: 24.08.2006 JP 2006227924
(71) Applicant: Funai Electric Co., Ltd., Daito-shi Osaka 574-0013 (JP)
(72) Inventor: Hamaoka, Mika, Daito-shi Osaka 574-0013 (JP); Fujii, Hitoshi, Daito-shi Osaka 574-0013 (JP); Nagashima, Kenji, Daito-shi Osaka 574-0013 (JP)
(74) Representative: Beetz & Partner

(57) **Abstract**

An optical pickup device includes a plurality of light sources for emitting light beams having different wavelengths; an objective lens for focusing the light beams emitted from the light sources on a recording surface of an optical recording medium; and a photo detector for receiving the light beams reflected from the recording surface. The light beams emitted from the light sources include a first light beam and a second light beam having wavelengths different from each other, the first light beam is incident on the objective lens with a finite system, and the second light beam is incident on the objective lens with an infinite system, paths through which the reflected light of the first light beam and the second light beam reach the photo detector are common to each other, and a hologram element for compensating a focal position in an optical axis direction of one of the first light beam and the second light beam is disposed at a position through which only the reflected light beams pass and which is in front of the photo detector.

## Description

### BACKGROUND OF THE INVENTION

### Field of the Invention

The present invention relates to an optical pickup device capable of reading and recording information by irradiating light beams on an optical recording medium, and more particularly, to an optical pickup device having a plurality of light sources emitting light beams having different wavelengths so as to support plural types of optical recording media.

### Description of Related Art

Optical recording media including a compact disc (hereinafter referred to as a CD) and a digital versatile disc (hereinafter referred to as a DVD) are widely available. Furthermore, in order to increase the amount of information recorded on the optical recording medium, researches for increasing the density of the optical recording media have been carried out recently. For example, a high density optical recording medium such as a Blu-Ray Disc (Registered Trademark ; hereinafter referred to as a BD) and HD-DVD are available in the market.

Recording/reproducing for such optical recording media is performed by using an optical pickup device which can record or read information by irradiating a light beam on an optical recording medium. Depending on types of these optical recording media, the numerical aperture (NA) of an objective lens or a wavelength of a light source which are used in the optical pickup device varies. Accordingly, in order to increase recording density of the optical recording medium, it is necessary to decrease a spot diameter of light beams focused on the optical recording medium.

In order to decrease a spot diameter of the light beams for increasing the density, it is necessary to increase the NA of the objective lens and decrease the wavelength of the light beams. The NAs and the wavelengths of the light sources are shown by taking a CD, a DVD, and a BD of which recording densities are different from each other as examples. For example, for a CD, the NA of the objective lens is 0.50 and the wavelength of the light source is 780 nm, for a DVD, the NA of the objective lens is 0.65 and the wavelength of the light source is 650 nm, and for a BD, the NA of the objective lens is 0.85 and the wavelength of the light source is 405 nm.

As described above, since a different NA of an objective lens or a different wavelength of a light source is used in accordance with types of the optical recording media, it can be considered that different optical pickup devices are used for different optical recording media. However, since it is convenient to read information from plural types of optical recording media and to do the like by using one optical pickup device, a lot of optical pickup devices compatible with the plural types of optical recording media have been developed. Among such optical pickup devices, there are optical pickup devices employing one objective lens for focusing a light beam emitted from the light source on the optical recording medium in consideration of assembly-convenience, miniaturization of the device, and the like.

When one objective lens disposed in the optical pickup device supporting the plural types of optical recording media is used, since a thickness of a transparent cover layer for protecting a recording layer is different depending on the types of optical recording media (for example, the thickness of the transparent cover layer of a CD is 1.2 mm, the thickness of the transparent cover layer of a DVD is 0.6 mm, and the thickness of the transparent cover layer of a BD is 0.1 mm), there is a problem that quality of recording or reading information is deteriorated by spherical aberration in an optical system of the optical pickup device.

In known optical systems of the optical pickup devices, there has been contrived a lot of configurations, for example, employing an aberration compensation element for compensating aberration by changing phase distribution of incident light beams. However, there are problems of an increase in the number of parts and costs in a case where the configuration employing the aberration compensation element is used.

As disclosed in, for example, JP-A-2005-339718, there has been known technology for performing a compensation of the spherical aberration in an optical system by employing a configuration of a finite system in which diverging light having a predetermined divergence state is incident on an objective lens. In this case, since the diverging light having a predetermined divergence state can be obtained, for example, by adjusting a position of a collimator lens disposed in an optical system, the technology is useful for compensating the spherical aberration and decreasing the number of parts.

As disclosed in, for example JP-A-2005-339718, in a case where an optical pickup device which supports plural types of optical recording media has one objective lens focusing a light beam emitted from a light source on an optical recording medium, a configuration of use of combination between an infinite system (an optical system in which parallel light is incident on an objective lens) and a finite system (an optical system in which diverging light or converging light is incident on an objective lens) may be used in consideration of a proper compensation of wavefront aberration and the like, with respect to all optical recording media. However, in the case of the configuration of use of combination between the infinite system and the finite system, light-path lengths of light beams reflected from the optical recording medium and incident on a photo detector are mutually different between the infinite system and the finite system (the light-path lengths may be mutually different between a plurality of finite systems). Accordingly, there have been problems such as an increase in size and high costs in optical pickup device since it is necessary to increase the number of photo detectors in accordance with the number of difference of the light-path lengths.

### SUMMARY OF THE INVENTION

In consideration of the problems mentioned above, it is an object of the present invention to provide an optical pickup device having a plurality of light sources for emitting light beams which has different wavelengths from each other in order to support plural types of optical recording media, the device capable of reducing occurrence of spherical aberrations and miniaturizing the device size in low costs.

In order to achieve the object mentioned above, the present invention is characterized by that an optical pickup device includes a plurality of light sources for emitting light beams having different wavelengths; an objective lens for focusing the light beams emitted from the light sources on a recording surface of an optical recording medium; and a photo detector for receiving reflected light beams reflected from the recording surface. In the optical pickup device, the light beams emitted from the light sources include a first light beam and a second light beam having wavelengths different from each other, the first light beam is incident on the objective lens with a finite system, and the second light beam is incident on the objective lens with an infinite system, paths through which the reflected light beams of the first light beam and the second light beam reach the photo detector are common to each other, and a hologram element for compensating a focal position in an optical axis direction of one of the first light beam and the second light beam is disposed at a position through which only the reflected light beams pass and which is in front of the photo detector.

With such a configuration, it is possible to reduce the spherical aberration by using the combination between the finite system and the infinite system. It is also possible to decrease the number of the photo detector since a first light beam of the finite system and a second light beam of the infinite system having mutually different light-path lengths can be focused on the same photo detector by using function of compensating the focal position in an optical axis direction of the hologram element. As a result, it is possible to contrive a decrease in size and costs of the optical pickup device.

In the optical pickup device of the aforementioned configuration according to the present invention, the hologram element is formed by a transparent member having a concentric circular interference pattern in which pitches between diffraction grooves are gradually narrowed toward an outer peripheral edge.

With such a configuration, it is possible to decrease costs in fabrication and use of the hologram element since the hologram element is constituted of a transparent member, and an interference pattern having a concentric circular shape is provided on the transparent member so as to have a lens function.

In the optical pickup device of the aforementioned configuration according to the present invention, the hologram element is a liquid crystal element having a liquid crystal and two transparent electrodes interposing the liquid crystal therebetween, and the electrode pattern at least one of the transparent electrodes is a concentric circular interference pattern in which pitches between adjacent electrodes are gradually narrowed toward an outer peripheral edge.

With such a configuration, it is possible to electrically control ON/OFF state of the function of compensating the focal position in the optical axis direction of the hologram element since the hologram element is employed as a liquid crystal element. Hence, it is also possible to minimize transmittance deterioration of the light beam as much as possible when the light beam which is not necessary to adjust the focal position passes through the hologram element. As a result, it is possible to improve light transmission efficiency of the optical pickup device.

In the optical pickup device of the aforementioned configuration according to the present invention, the hologram element is a holographic polymer dispersed liquid crystal including liquid crystal droplets and a polymer resin for dispersing the liquid crystal droplets with a predetermined pattern.

With such a configuration, it is possible to improve the light transmission efficiency by decreasing stray light since a configuration having wavelength selectivity and angle selectivity can be realized by a holographic polymer dispersed liquid crystal (hereinafter, it may be referred to as HPDLC).

In the optical pickup device of the aforementioned configuration according to the present invention, the hologram element also has a function of adding astigmatism.

With such a configuration, it is possible to reduce the number of the parts since it is possible to omit lenses such as a cylindrical lens which has been usually disposed in front of the photo detector by using the configuration in which the hologram element having the function of compensating the focal position also has the function of adding astigmatism.

### BRIEF DESCRIPTION OF THE DRAWINGS

Fig. 1 is a schematic view illustrating a configuration of an optical system of an optical pickup device according to a first embodiment.
Fig. 2 is a diagram illustrating a feature that a light beam emitted from light source units is reflected from a recording surface of an optical recording medium and the reflected light is focused when a hologram element is not disposed.
Fig. 3 is a schematic view illustrating a configuration of a pattern formed on a surface of a holographic element included in the optical pickup device according to the first embodiment.
Fig. 4A is a schematic view illustrating a configuration of a section of the hologram element included in the optical pickup device according to the first embodiment.
Fig. 4B is a schematic view illustrating a configuration of a section of the other form of the hologram element included in the optical pickup device according to the first embodiment.
Fig. 5 is a schematic view illustrating a modified example of the hologram element included in the optical pickup device according to the first embodiment.
Fig. 6A is a schematic view illustrating a section of a hologram element included in an optical pickup device according to a second embodiment.
Fig. 6B is a schematic view illustrating an electrode pattern of a second transparent electrode of the hologram element included in the optical pickup device according to the second embodiment.
Fig. 7 is a schematic view illustrating a configuration of a hologram element included in an optical pickup device according to a third embodiment.
Fig. 8 is a schematic view illustrating a difference between convergence angles of incident light and outgoing light when the light beam for BD passes through the hologram element.

### DESCRIPTION OF THE PREFERRED EMBODIMENTS

Hereinafter, embodiments of the present invention will be described with reference to the accompanying drawings. The embodiments described below are merely an example, and so the present invention should not be interpreted to be limited to the embodiments described below.

### First Embodiment

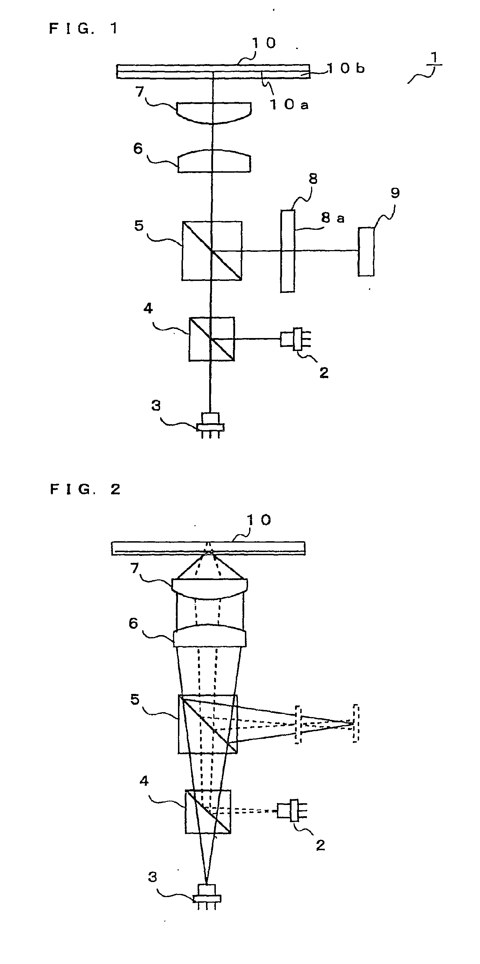

Fig. 1 is a schematic view illustrating a configuration of an optical system of an optical pickup device according to a first embodiment. The optical pickup device 1 according to the embodiment is provided so as to be compatible with BD/DVD/CD (optical recording media). The optical pickup device 1 includes a first light source unit 2, a second light source unit 3, a dichroic prism 4, a beam splitter 5, a collimator lens 6, an objective lens 7, a hologram element 8, and a photo detector 9.

The first light source unit 2 is a two-wavelength integrated laser diode which has two luminous points so as to emit light beams having two types of wavelengths, and the unit emits light beam having a wavelength of 780 nm used for a CD and light beam having a wavelength of 650 nm used for a DVD. The second light source unit 3 is a single-wavelength laser diode and emits light beam having a wavelength of 405 nm used for a BD. The light beam is emitted from first light source unit 2 and the second light source unit 3 is sent to the dichroic prism 4.

Although the embodiment is configured so that the light beam for a CD and a DVD is emitted by using the two-wavelength integrated laser diode, the embodiment may be configured so that the light is emitted by using two laser diodes having single wavelength, respectively.

The dichroic prism 4 reflects the laser emitted from the first light source unit 2 and transmits the light beam emitted from the second light source unit 3. In addition, the first light source unit 2 and the second light source unit 3 are disposed so as to have substantially the same optical axes of the light beam transmitted through the dichroic prism 4. The light beam transmitted through dichroic prism 4 is sent to the beam splitter 5.

The beam splitter 5 transmits and guides the light beam emitted from the first light source unit 2 and the second light source unit 3 to the optical recording medium 10 side, and the splitter reflects and guides the reflected light from a recording surface 10a of the optical recording medium 10 to the photo detector 9 side. The light beam emitted from the light source units 2 and 3 and transmitted through the beam splitter 5 is sent to the collimator lens 6.

The collimator lens 6 is adjustably disposed to convert the light beam emitted from the first light source unit 2 into diverging light having a predetermined divergence angle and to convert the light beam emitted from the second light source unit 3 into parallel light substantially parallel to the optical axis. The light beam transmitted through the collimator lens 6 is sent to the objective lens 7. Specifically, the light beam, which is used for a CD and a DVD, emitted from the first light source unit 2 is incident on an objective lens 7 with a finite system in which the light is incident in the state of diverging light, and the light beam, which is used for a BD, emitted from the second light source unit 3 is incident on an objective lens 7 with an infinite system in which the light is incident in the state of parallel light to the optical axis. An effective diameter of the light beam being incident on the objective lens 7 and having each wavelength, is adjusted by an aperture filter that is not shown in the drawings.

The objective lens 7 focuses the incident light beam on the recording surface 10a of the optical recording medium 10. In the embodiment, the objective lens 7 is designed so that the spherical aberration value is substantially zero when information of a BD is read or recorded. Hence, there is a problem that the spherical aberration occurs in the process of reading information or the like in a CD and a DVD having a thickness of a transparent cover layer 10b different from that of a BD. However, since the light beam for a CD and a DVD is incident as diverging light having a predetermined divergence angle on the objective lens 7 by adjusting the position of the collimator lens 6 as described above, the spherical aberration can be almost eliminated so as not to cause any problem in reading information and the like. The thickness of the transparent cover layer 10b is 0.1 mm in a BD, 0.6 mm in a DVD, and 1.2 mm in a CD.

The objective lens 7 are mounted on an actuator which is not shown, and the objective lens 7 are movable in at least two directions which are a focus direction parallel to the optical axis of the objective lens 7 and a tracking direction parallel to the radius direction of the optical recording medium 10 by the actuator. With such a configuration, the objective lens 7 are configured so that the focal position thereof is always adjusted on the recording surface 10a, and a spot position of the light beam focused by the objective lens 7 follow a track formed on the optical recording medium 10.

The light reflected from the optical recording medium 10 is sequentially transmitted through the objective lens 7 and the collimator lens 6, is reflected by the beam splitter 5, and is sent to the hologram element 8. The light beam, which is used for a CD and a DVD, emitted from the first light source unit 2 is transmitted through the hologram element 8 as it is, is focused on a light receiving region (which is not shown in the drawings) of the photo detector 9. Conversely, the light beam, which is used for a BD, emitted form the second light source unit 3 is diffracted by the hologram element 8, whereby the focal position of an optical axis direction thereof is compensated, and thus the light is focused on the light receiving region of the photo detector 9. The reason why the holographic element 8 is provided and the configuration thereof will be described later.

The photo detector 9 serves for converting light signals which are received in the light receiving region not shown in the drawings into electric signals. The electrical signals generated from the photo detector 9 are used as reproducing signals for reproducing information, focus error signals or tracking error signals or the like for adjusting a focus or a tracking of the objective lens 7.

Next, the hologram element 8 will be described in detail. First, the reason why the hologram element 8 is disposed in the optical pickup device 1 will be described with reference to Fig. 2. Fig. 2 is a diagram illustrating a feature that light beams emitted from the first light source unit 2 and the second light source unit 3 are reflected from the recording surface 10a of the optical recording medium 10 and the reflected lights are focused when the hologram element 8 is not disposed. In the drawing, a solid line shows the light beam, which is used for a BD, emitted from the second light source unit 3, and a dashed line shows the light beam, which is used for a CD, emitted from the first light source unit 2.

In the optical pickup device 1, the light beam for a BD and the light beam for a CD have a common path in which the reflected light passes through the objective lens 7 and reaches the photo detector 9. However, by adjusting position relationship between the first light source unit 2 and the collimator lens 6, and the position relationship between the second light source unit 3 and the collimator lens 6, the light beam, which is used for a BD, emitted from the second light source unit 3 is incident on the objective lens 7 with the infinite system, and the light beam, which is used for a CD, emitted from the first light source unit 2 is incident on the objective lens 7 with the finite system. Hence, the light beam for a BD has longer distance to focus the reflected light than the light beam for a CD as shown in Fig. 2. In this case where the hologram element 8 is not disposed, there is an inconvenience in that it is necessary to divide the photo detector into two photo detectors for a CD and a BD. Accordingly, the hologram element 8 is disposed so as not to increase the photo detector.

The light beam for a DVD not shown in Fig. 2 will be described. In the embodiment, the light beam for a DVD travels through the common path where the light beam for a CD also travels and reaches the optical recording medium 10, and the light reflected from the optical recording medium 10 also travels through the common path and reaches the photo detector 9, so that the light beam for a DVD is focused on the same position as the light beam for a CD. Accordingly, in the embodiment, the hologram element 8 is disposed so as to adjust a focal position of the light beam for a BD to a focal position of the light beam for a CD and a DVD by performing the compensation.

The hologram element 8 included in the optical pickup device 1 is made of a transparent member such as glass or plastic, and a pattern is formed on the surface 8a thereof so as to obtain desired diffraction light with respect to the light beam for a BD.

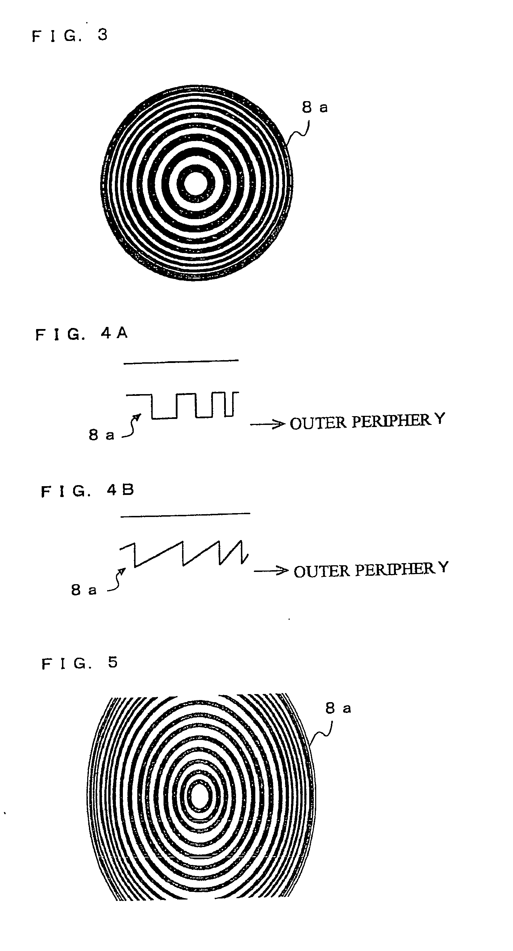

Fig. 3 is a schematic view illustrating a configuration of the pattern formed on the surface 8a of the hologram element 8. As shown in Fig. 3, a concentric circular interference pattern in which pitches between diffraction grooves are gradually narrowed along an outer peripheral edge is formed on the surface 8a of the hologram element 8. The hologram element 8 can serve as a lens by forming such an interference pattern. According to the embodiment, the interference pattern is formed so as to focus +1^{st} order light of the light beam for a BD passing through the hologram element 8, on the photo detector 9.

The interference pattern formed on the surface 8a of the hologram element 8 is the same as a pattern formed on the surface 8a of the hologram element 8 by an interference between light beam which is emitted from the second light source unit 3, reflected by the optical recording medium 10, and reflected again by the beam splitter 5; and light beam which is diffracted to be converging light having a predetermined convergence angle, focused on the photo detector 9 and reflected from the focal position.

In addition, according to the embodiment, the interference pattern formed on the surface 8a of the hologram element 8 is configured so as to have a plurality of rectangular grooves formed thereon, have the wavelength selectivity obtained by adjusting groove depth and the like, and generate predetermined diffracted light with respect to only the light beam for a BD as shown in Fig. 4A. Here, it is possible to increase diffraction efficiency by employing the configuration (i.e. blazed configuration) in which a plurality of sawlike grooves is formed thereon as shown in Fig. 4B, and thus it is allowed to employ a blazed configuration as shown in Fig. 4B.

The hologram element 8 according to the embodiment is configured to have only a function of compensating the focal position of the optical axis direction with respect to the light beam for a BD, but for example, it is allowed to configure the hologram element so as to have a function of adding astigmatism in addition to the function of compensating the focal position of the light beam for a BD. With such a configuration, it is possible to remove lenses such as a cylindrical lens usually used for generating a focus error signal obtained by the astigmatism method.

Fig. 5 is a schematic view illustrating the pattern formed on the surface of the hologram element when embodying simultaneously the function of compensating the focal position and the function of adding astigmatism. As shown in Fig. 5, the pattern having a concentric ellipse shape in which pitches between the diffraction grooves are gradually narrowed toward the outer peripheral edge is formed on the surface of the hologram element, and thereby it is possible to add the astigmatism to the light beam (which is the light beam for a BD in the embodiment) for compensating the focal position. In this case, for light beam having other wavelengths, it may be possible to provide a pattern (for example, a pattern in which pitches between the diffraction grooves are gradually narrowed toward the outer peripheral edge while having diffraction grooves formed in a shape of plural belts) in which only astigmatism is added to the opposite side of the hologram element.

### Second Embodiment

Next, an optical pickup device according to the second embodiment will be described. A configuration of the optical pickup device according to the second embodiment is the same as that of the optical pickup device according to the first embodiment other than that of the hologram element 8. Accordingly, only the configuration of the hologram element 8 will be described in the following section.
In addition, in the case where duplicated sections exist in the embodiments, those sections will be referenced by the same reference numerals, and in the case where there is no need of particular description, the description thereof will be omitted.

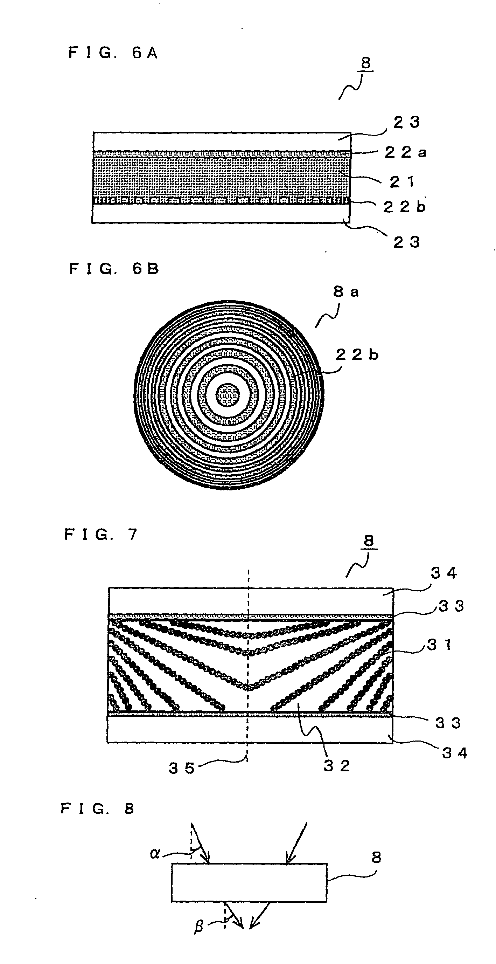

Figs. 6A and 6B are schematic views illustrating a configuration of a hologram element 8 included in an optical pickup device according to the second embodiment. Fig. 6A is a schematic view illustrating a section of the hologram element 8, and Fig. 6B is a schematic view illustrating an electrode pattern of a second transparent electrode 22b of the hologram element 8. As shown in Fig. 6A, the hologram element 8 is a liquid crystal element including a liquid crystal 21, a first transparent electrode 22a and the second transparent electrode 22b having a liquid crystal 21 interposed therebetween, and two transparent substrates 23 for supporting the transparent electrodes 22a and 22b.

The liquid crystal 21 has a uniform refractive index (no) in all areas and is oriented so as not to have an effect on light beams passing through the liquid crystal 21 when a voltage is not applied between the first transparent electrode 22a and the second transparent electrode 22b. Hence, when the voltage is not applied between the first transparent electrode 22a and the second transparent electrode 22b, the light beam passing through the hologram element 8 is transmitted without any particular effect. On the other hand, when the voltage is applied between the first transparent electrode 22a and the second transparent electrode 22b, the liquid crystal 21 changes the orientation direction thereof depending on the electrode pattern formed on the transparent electrodes 22a and 22b.

The first transparent electrode 22a is formed of one electrode without a particular pattern. Conversely, the second transparent electrode 22b has an electrode pattern, and the electrode pattern is formed as an interference pattern having a concentric shape in which pitches between adjacent electrodes are gradually narrowed toward the outer peripheral edge as shown in Fig. 6B.

The interference pattern is the same as a pattern formed on a surface of the transparent substrates 23, on which the second transparent electrode 22b is formed, by an interference between light beam which is emitted from the second light source unit 3, reflected by the optical recording medium 10, and reflected again by the beam splitter 5; and light beam which is diffracted to be converging light having a predetermined convergence angle, focused on the photo detector 9 and reflected from the focal position.

Accordingly, if a predetermined voltage is applied between the first transparent electrode 22a and the second transparent electrode 22b when the light beam for a BD passes through the holographic element 8, the orientation of the liquid crystal 21 disposed between the first transparent electrode 22a and the second transparent electrode 22b is changed, the refractive index in the position is changed (n₀ → n₁), the light beam for a BD passing through the holographic element 8 is diffracted, and thus diffracted light is generated. By using a diffracted ray (for example, +1^{st} order light), of which light path distance to a focal position in the optical axis direction is shortened, of the generated diffraction rays (for example, ±1^{st} order light), the diffracted light is focused on a photo detector 9 which is the same as the photo detector for detecting the light beam for a CD and a DVD.

On the other hand, when the light beam for a CD and a DVD passes through the hologram element 8, a voltage is not applied between the first transparent electrode 22a and the second transparent electrode 22b, and thereby the hologram element 8 has no particular effect on the light beam for a CD and a DVD. With such a configuration, the light beam for a CD and a DVD is focused on the photo detector 9 without a transmittance decrease little if anything due to the hologram element 8.

The hologram element 8 of which detailed configuration is not shown in the drawings is configured so that all second transparent electrodes 22b are equipotential and connected to a drive circuit (not shown in the drawings) for the hologram element 8 via one line. Additionally, the first transparent electrodes 22a are also connected to the drive circuit mentioned above via one line.

In the embodiment, the electrode pattern is not formed on the first transparent electrode 22a, but it is allowed to form the same electrode pattern as the second transparent electrode 22b on the first transparent electrode 22a. In this case also, it is possible to obtain the same effect as described above.

### Third Embodiment

Next, an optical pickup device according to the third embodiment will be described. A configuration of the optical pickup device according to the third embodiment is the same as that of the optical pickup device according to the first embodiment other than that of the hologram element 8. Accordingly, only the configuration of the hologram element 8 will be described in the following section.
In addition, in the case where duplicated sections exist in the embodiments, those sections will be referenced by the same reference numerals, and in the case where there is no need of particular description, the description thereof will be omitted.

Fig. 7 is a schematic view illustrating a configuration of the hologram element 8 included in an optical pickup device according to the third embodiment. In the same manner as the second embodiment, the holographic element 8 according to the embodiment is also an element using a liquid crystal, but the liquid crystal is a holographic polymer dispersed liquid crystal (HPDLC), and the configuration thereof is different from that of the liquid crystal element of the second embodiment.

The hologram element 8 according to the embodiment includes droplets 31 of a nematic liquid crystal (which has a diameter of 100 nm or less), a polymer resin 32 (which has a thickness of several µm to several tens of µm) for dispersing the liquid crystal droplets 31, two transparent electrodes 33 having the polymer resin 32, in which the liquid crystal droplets 31 is dispersed, interposed therebetween, and two transparent substrates 34 supporting the transparent electrode 33. Note that the polymer resin 32 consists of material having substantially the same refractive index as the liquid crystal which constitutes the liquid crystal droplets 31.

In HPDLC, a wavelength and a direction of the light beam emitted from the HPDLC when the HPDLC performs a function of a hologram is determined by the dispersion pattern of the liquid crystal droplets dispersed in the polymer resin. In the hologram element (HPDLC) 8 according to the embodiment, the liquid crystal molecules 31 is dispersed in a predetermined dispersion pattern (see Fig. 7) symmetrical to a central axis 35 of the holographic element 8 so that the light beam for a BD of 405 nm is emitted as converging light having a convergence angle β (see Fig. 8) lager than a convergence angle α (see Fig. 8) as much as predetermined amount.
Fig. 8 is a schematic view illustrating a difference between convergence angles of incident light and exiting light when the light beam for a BD passes through the hologram element 8.

The light beam for a BD has a shorter focus distance in the optical axis direction than the original focus distance by passing through the hologram element 8 and is focused on the photo detector 9 same as a photo detector for detecting the light beam for a CD and a DVD. Meanwhile, when the light beam for a CD and a DVD passes through the hologram element 8, a voltage is applied to the transparent electrodes 33. With such a configuration, the liquid crystal orientation of the liquid crystal droplets 31 becomes parallel to an electric field, the refractive indexes of the liquid crystal droplets 31 and the polymer resin 32 coincide with each other, and thus the light beam for a CD and a DVD is focused on the photo detector 9 without a particular effect.

The dispersion pattern of the aforementioned liquid crystal droplets 31, for example, is formed by using the light beam which is emitted from the second light source unit 3, reflected by the optical recording medium 10, and reflected again by the beam splitter 5; and the light beam which is superposed on light beam focused on the photo detector 9 by refracting the propagation direction thereof at a predetermined angle by the hologram element 8 and is emitted from the photo detector 9 position so as to have an opposite propagation direction thereof.

That is, when injecting a compound liquid of the liquid crystal and the photocurable resin into a gap of the two transparent substrates 34 having the transparent electrodes 33 formed thereon and irradiating the two light beams so as to form interference fringes on the compound liquid position, a photopolymerization of polymer is started in an anti-node portion having strong light intensity of interference fringes to form a polymer resin phase, and the liquid crystal separated by the polymerization of polymer forms the liquid crystal droplets in a node portion having weak light intensity of interference fringes. With such a method, the dispersion pattern of the liquid crystal droplets 31 can be formed as shown in Fig. 7.

In the embodiment, the transparent electrodes 33 are provided so as to apply a voltage thereto when the light beam for a CD and a DVD pass through, but it is allowed not to dispose the transparent electrodes 33. In this case also, the light beam for a CD and a DVD is transmitted and focused on the photo detector 9. But it is preferable to provide the transparent electrodes 33 in order to suppress attenuation of the focused light beam as described in the embodiments.

### Modified Examples

In the embodiments as described above, the hologram element 8 is configured so as to compensate the focal position in the optical axis direction of the light beam for a BD, but the invention is not limited to thereto, and it is allowed to compensate the focal position (that is, extend the distance to the focus) in the optical axis direction of the light beam for a CD and a DVD by using the hologram element 8. In this case, it is possible to use a configuration that employs just one hologram element 8, for example, when forming a pattern for adjusting only the focal position of the light beam for a DVD on one side of a transparent member and forming a pattern for adjusting only the focal position of the light beam for a CD on the other side of the transparent member.

Additionally, in the embodiments as described above, the optical pickup device is configured particularly not to have an element for compensating a spherical aberration, but aspects of the invention is not limited to thereto. Therefore, it is allowed to use a configuration such as compensating the spherical aberration by disposing an element in addition for compensating the spherical aberration in the case where the spherical aberration cannot be sufficiently compensated even when using a combination between an infinite system and a finite system. The present invention is contrived to improve an optical pickup device in which the combination between the infinite system and the finite system is used so as to reduce the spherical aberration and which has a plurality of focal positions of light reflected from an optical recording medium. In this range, the present invention is widely applicable.

Additionally, in the embodiments as described above, the optical pickup device compatible with a BD, a DVD, and a CD is shown, but the present invention is not limited to the optical pickup device compatible with three types of the optical recording media. As might be expected, it is possible to widely apply the present invention to an optical pickup device such as compatible with other three types, two types or four or more types of optical recording media.

The optical pickup device according to the invention can decrease the number of the photo detectors in the optical pickup device using the combination between the infinite system and the finite system. Accordingly, a decrease in size and costs of the optical pickup device can be contrived, and thus the optical pickup device according to the present invention is useful.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An optical pickup device comprising:
a plurality of light sources for emitting light beams having different wavelengths;
an objective lens for focusing the light beams emitted from the light sources on a recording surface of an optical recording medium; and
a photo detector for receiving reflected light beams reflected from the recording surface,
wherein the light beams emitted from the light sources include a first light beam and a second light beam having wavelengths different from each other, the first light beam is incident on the objective lens with a finite system, and the second light beam is incident on the objective lens with an infinite system,
paths through which the reflected light beams of the first light beam and the second light beam reach the photo detector are common to each other, and
a hologram element for compensating a focal position in an optical axis direction of one of the first light beam and the second light beam is disposed at a position through which only the reflected light beams pass and which is in front of the photo detector.

2. The optical pickup device according to Claim 1, wherein the hologram element is formed by a transparent member having a concentric circular interference pattern in which pitches between diffraction grooves are gradually narrowed toward an outer peripheral edge.

3. The optical pickup device according to Claim 1 or 2, wherein the hologram element is a liquid crystal element having a liquid crystal and two transparent electrodes interposing the liquid crystal therebetween, and the electrode pattern at least one of the transparent electrodes is a concentric circular interference pattern in which pitches between adjacent electrodes are gradually narrowed toward an outer peripheral edge.

4. The optical pickup device according to at least one of the preceding Claims, wherein the hologram element is a holographic polymer dispersed liquid crystal including liquid crystal droplets and a polymer resin for dispersing the liquid crystal droplets with a predetermined pattern.

5. The optical pickup device according to at least one of the preceding Claims, wherein the hologram element also has a function of adding astigmatism.
